# EUROPEAN PATENT APPLICATION

(11) **EP 4 592 986 A1**
(43) Date of publication of application: **30.07.2025**
(21) Application number: 23884810.5
(22) Date of filing: 30.10.2023
(51) Int. Cl.: G08G 1/0967, G05D 1/00

(54) **VEHICLE DEADLOCK PROCESSING METHOD, APPARATUS, AND RELATED DEVICE**

(30) Priority: 31.10.2022 CN 202211350481
(71) Applicant: Shenzhen Yinwang Intelligent Technologies Co., Ltd., Shenzhen, Guangdong 518129 (CN)
(72) Inventor: XU, Zhe, Shenzhen, Guangdong 518129 (CN); XU, Yongguo, Shenzhen, Guangdong 518129 (CN); XIA, Yongjun, Shenzhen, Guangdong 518129 (CN); JIAN, Qifan, Shenzhen, Guangdong 518129 (CN)
(74) Representative: Pfenning, Meinig & Partner mbB
(86) International application number: PCT/CN2023/127590
(87) International publication number: WO 2024/093879

(57) **Abstract**

This application provides a vehicle deadlock processing method and apparatus, and a related device, and may be applied to the fields such as autonomous driving and intelligent vehicles. The method includes: receiving vehicle deadlock information from a first vehicle, where the vehicle deadlock information of the first vehicle includes identification information of the first vehicle, and further includes location information of the first vehicle and/or information about a first conflict object corresponding to the first vehicle; sending an escape suggestion for the first vehicle to the first vehicle and/or sending an escape suggestion for at least one second vehicle to the at least one second vehicle based on the vehicle deadlock information of the first vehicle, where the at least one second vehicle is a vehicle associated with the vehicle deadlock information of the first vehicle. Implementing this application can improve efficiency of resolving a vehicle deadlock.

## Description

This application claims priority to Chinese Patent Application No. 202211350481.X, filed with the China National Intellectual Property Administration on October 31, 2022, and entitled "VEHICLE DEADLOCK PROCESSING METHOD AND APPARATUS, AND RELATED DEVICE", which is incorporated herein by reference in its entirety.

### TECHNICAL FIELD

This application relates to the field of uncrewed driving, and in particular, to a vehicle deadlock processing method and apparatus, and a related device.

### BACKGROUND

The autonomous driving technology is widely applied in the field of passenger vehicles and commercial vehicles. In a running process of an autonomous vehicle, in consideration of safety, when there is an approaching vehicle or obstacle ahead of the vehicle, the vehicle usually adopts a stop and yield strategy when the vehicle cannot bypass the approaching vehicle or obstacle. As a quantity of autonomous vehicles gradually increases, driving route interaction scenarios become increasingly complex. When a plurality of autonomous vehicles are traveling toward each other and recognize each other as obstacles, the vehicles simultaneously adopt a strategy of yielding to each other, and consequently, the vehicles block each other's bypass routes, to cause a conflict and deadlock. In view of this, in the conventional technology, it is proposed that after the conflict and deadlock occurs to the autonomous vehicles, remote control is manually operated on the vehicles through a remote control session (including a remote video takeover), to help the vehicles resolve the conflict and deadlock. However, helping the vehicles resolve the conflict and deadlock manually is low in efficiency.

### SUMMARY

This application provides a vehicle deadlock processing method and apparatus, and a related device, to improve efficiency of resolving a vehicle deadlock.

According to a first aspect, this application provides a vehicle deadlock processing method. The method includes:
receiving vehicle deadlock information from a first vehicle, where the vehicle deadlock information of the first vehicle includes identification information of the first vehicle, and further includes location information of the first vehicle and/or information about a first conflict object corresponding to the first vehicle; and
sending an escape suggestion for the first vehicle to the first vehicle and/or sending an escape suggestion for at least one second vehicle to the at least one second vehicle based on the vehicle deadlock information of the first vehicle, where the at least one second vehicle is a vehicle associated with the vehicle deadlock information of the first vehicle.

Optionally, the at least one second vehicle may also send vehicle deadlock information of the second vehicle to a cloud platform. In other words, the cloud platform may further receive vehicle deadlock information sent by the at least one second vehicle. The first vehicle and the second vehicle are understood as vehicles located in a same deadlock area. For example, the cloud platform may determine, based on the vehicle deadlock information separately reported by the first vehicle and the second vehicle, whether the first vehicle is associated with the second vehicle. For example, that the vehicle deadlock information of the first vehicle is associated with the vehicle deadlock information of the second vehicle may be understood as follows: (1) Location information that is of the first vehicle and that is reported by the first vehicle and location information that is of the second vehicle and that is reported by the second vehicle belong to a same deadlock area. For example, when a distance between a location of the first vehicle and a location of the second vehicle is less than a preset distance threshold, it is considered that the first vehicle and the second vehicle are close to each other or belong to a same deadlock area. (2) Location information that is of the first vehicle and that is reported by the first vehicle and location information that is of a second conflict object corresponding to the second vehicle and that is reported by the second vehicle belong to a same deadlock area. For example, when a distance between a location of the first vehicle and a location that is of the second conflict object corresponding to the second vehicle and that is reported by the second vehicle is less than a preset distance threshold, it is considered that the first vehicle and the second vehicle are close to each other or belong to a same deadlock area. In other words, the first vehicle may be the second conflict object sensed by the second vehicle. Alternatively, location information that is of a first conflict object corresponding to the first vehicle and that is reported by the first vehicle and location information that is of the second vehicle and that is reported by the second vehicle belong to a same deadlock area. For example, when a distance between a location that is of the first conflict object corresponding to the first vehicle and that is reported by the first vehicle and a location that is of the second vehicle and that is reported by the second vehicle is less than a preset distance threshold, it is considered that the first vehicle and the second vehicle are close to each other or belong to a same deadlock area. In other words, the second vehicle may be the first conflict object sensed by the first vehicle. (3) Location information that is of the first conflict object corresponding to the first vehicle and that is reported by the first vehicle is the same as or similar to location information that is of the second conflict object corresponding to the second vehicle and that is reported by the second vehicle. In other words, a conflict object sensed by the first vehicle and a conflict object sensed by the second vehicle are a same conflict object. For example, when the conflict object is located between the first vehicle and the second vehicle, and blocks the first vehicle and the second vehicle, although the first vehicle and the second vehicle cannot sense each other, the first vehicle and the second vehicle belong to a same deadlock area. Optionally, that the vehicle deadlock information of the first vehicle is associated with the vehicle deadlock information of the second vehicle may be further understood as follows: The cloud platform performs trajectory conflict detection on the first vehicle and the second vehicle based on the vehicle deadlock information reported by the first vehicle and the vehicle deadlock information of the second vehicle. If it is determined that a trajectory of the first vehicle conflicts with a trajectory of the second vehicle, it indicates that the first vehicle is associated with the second vehicle. If it is determined that a trajectory of the first vehicle does not conflict with a trajectory of the second vehicle, it indicates that the first vehicle is not associated with the second vehicle.

In this application, to protect user privacy, vehicle deadlock information reported by a vehicle after the vehicle is deadlocked may be information reported after data anonymization. The cloud platform receives vehicle deadlock information reported by each vehicle (that is, the cloud platform may learn global data), and assists each vehicle in escaping to resolve a deadlock from a global perspective, so as to improve efficiency of resolving the vehicle deadlock. It may be understood that information, reported by the first vehicle, about the first conflict object corresponding to the first vehicle may be specifically location information of the first conflict object, and/or attribute information of the first conflict object, and the like. This is not limited herein. Herein, the attribute information of the first conflict object may be information that can help recognize a conflict vehicle, such as a vehicle model of the vehicle, appearance information of the vehicle, or image information of the vehicle. This is not limited herein.

In a possible implementation, the sending an escape suggestion for the first vehicle to the first vehicle and/or sending an escape suggestion for at least one second vehicle to the at least one second vehicle based on the vehicle deadlock information of the first vehicle includes:
when the vehicle deadlock information of the first vehicle is not associated with vehicle deadlock information of another vehicle, sending an escape route for the first vehicle to the first vehicle.

In a possible implementation, the sending an escape suggestion for the first vehicle to the first vehicle and/or sending an escape suggestion for at least one second vehicle to the at least one second vehicle based on the vehicle deadlock information of the first vehicle includes:
when the vehicle deadlock information of the first vehicle is associated with vehicle deadlock information of another vehicle, sending the escape suggestion for the first vehicle to the first vehicle and sending the escape suggestion for the at least one second vehicle to the at least one second vehicle, where the at least one second vehicle is the another vehicle.

In this implementation, the cloud platform performs map matching based on location information of a deadlock event, to determine whether a plurality of vehicles in a deadlock have impact on each other, and perform area association on the vehicles in the deadlock, to improve processing efficiency. In other words, when deadlock information of a vehicle is reported, analyzing whether another vehicle is deadlocked with the vehicle helps recognize a plurality of deadlocked vehicles and associate the plurality of deadlocked vehicles as a deadlocked vehicle group. This can implement coordinated consideration of a multi-vehicle deadlock, and improve deadlock processing efficiency.

In a possible implementation, the sending the escape suggestion for the first vehicle to the first vehicle and sending the escape suggestion for the at least one second vehicle to the at least one second vehicle include:
sending a first escape suggestion for a target vehicle to the target vehicle, where the first escape suggestion includes a first escape route recommended for the target vehicle; and
sending a second escape suggestion to a third vehicle, where the second escape suggestion is a stop and yield suggestion or a yield route suggestion.

The target vehicle is a vehicle in the first vehicle and the at least one second vehicle, and the third vehicle is a vehicle other than the target vehicle in the first vehicle and the at least one second vehicle.

In this implementation, when the vehicle deadlock is a multi-vehicle deadlock, the cloud platform selects a firstly to-be-escaped vehicle (namely, the target vehicle), then notifies another vehicle to yield, and then enables the firstly to-be-escaped vehicle to escape. A manner in which a vehicle escape priority is analyzed to sequentially process vehicles in a deadlock area can ensure escape efficiency.

In a possible implementation, the method further includes:
receiving from the third vehicle a first response message in response to the second escape suggestion, where the first response message includes yield acknowledgement information or yield rejection information.

The sending a first escape suggestion for a target vehicle to the target vehicle includes:
when a quantity of received yield acknowledgement information is greater than a first threshold, sending the first escape suggestion for the target vehicle to the target vehicle.

In this implementation, when the another vehicle is confirmed to yield, an optimal vehicle is enabled to escape, so that a collision between the optimal vehicle and the another vehicle can be avoided when the optimal vehicle escapes. This helps improve vehicle escape safety.

In a possible implementation, the method further includes:
receiving an escape result from the target vehicle; and
if the escape result is an escape success, re-determining a target vehicle from a vehicle that has not escaped in the first vehicle and the at least one second vehicle until all of the first vehicle and the at least one second vehicle successfully escape; or
if the escape result is an escape failure, sending a third escape suggestion for the target vehicle to the target vehicle, where the third escape suggestion includes a second escape route recommended for the target vehicle.

In this implementation, for the determined target vehicle, when the target vehicle cannot successfully escape after a first attempt, an escape route may be sent again through an attempt to help the target vehicle escape.

In a possible implementation, the method further includes:
re-determining a target vehicle when a quantity of escape failures fed back by the target vehicle is greater than or equal to a second threshold.

In this implementation, for the determined target vehicle, when the target vehicle cannot successfully escape after a plurality of attempts to send an escape route, a target vehicle needs to be re-selected, to avoid a deadlock.

In a possible implementation, the target vehicle is a vehicle that makes total escape time shortest for the first vehicle and the at least one second vehicle, and the total escape time is associated with escape time of the first vehicle and escape time of each of the at least one second vehicle. Optionally, the target vehicle may alternatively be a vehicle that makes total escape time meet a preset time threshold for the first vehicle and the at least one second vehicle. This is not limited herein.

In this implementation, when selecting a preferred to-be-escaped vehicle (namely, the target vehicle), the cloud platform may consider escape time of all vehicles, sort the vehicles in ascending order of total escape time, and select a vehicle that helps improve overall escape efficiency of the deadlock vehicle group as the target vehicle.

In a possible implementation, escape time of any vehicle is determined based on first information.

The first information includes one or more of location information of the any vehicle, location information of a conflict object corresponding to the any vehicle, heading information of the any vehicle, location information of another vehicle that is included in vehicle deadlock information of the another vehicle associated with the any vehicle, location information of a conflict object corresponding to the another vehicle, and heading information of the conflict object corresponding to the another vehicle.

In this implementation, for calculating escape time of a vehicle, a corresponding escape route may be specifically determined first based on location information of the vehicle, location information of a conflict object corresponding to the vehicle, heading information of the vehicle, location information of another vehicle that is included in vehicle deadlock information of the another vehicle associated with the vehicle, and location information of a conflict object corresponding to the another vehicle, and then the escape time of the vehicle is calculated by combining a distance of the escape route and a speed of the vehicle.

In a possible implementation, the first information further includes one or more of the following information:
a dynamic parameter of the any vehicle, path planning information of the any vehicle, and surrounding information.

In this implementation, for calculating escape time of a vehicle, an escape route that is more suitable for a current traffic condition is planned with reference to data such as a dynamic parameter of the vehicle, path planning information of the vehicle, and/or surrounding information (for example, data collected by a road side unit or the like) in addition to location information of the vehicle, location information of a conflict object corresponding to the vehicle, heading information of the vehicle, location information of another vehicle that is included in vehicle deadlock information of the another vehicle associated with the vehicle, and location information of a conflict object corresponding to the another vehicle. Then, the escape time of the vehicle is calculated by combining a distance of the escape route and a speed of the vehicle. In this way, data reported by a plurality of data sources is obtained, so that the cloud platform can have a more complete global perspective, to help improve escape efficiency.

In a possible implementation, the target vehicle is a vehicle with a highest vehicle type priority in the first vehicle and the at least one second vehicle. Optionally, the target vehicle may alternatively be a vehicle that makes a priority meet a preset vehicle type priority for the first vehicle and the at least one second vehicle.

In this implementation, a vehicle type priority may be further considered during selection of the target vehicle. For example, a vehicle with a highest priority or a vehicle whose priority meets the preset vehicle type priority is selected as the target vehicle. This considers an actual requirement. For example, a special vehicle (for example, a vehicle for performing a special operation like an ambulance or a fire engine) preferably escapes. For another example, a commercial vehicle first escapes, and then a passenger vehicle escapes. For another example, a small vehicle first escapes, and then a large vehicle escapes. This improves applicability of the solution. It may be understood that total time of the vehicle may be further considered in combination with the vehicle type priority. To be specific, when selecting a preferred to-be-escaped vehicle (namely, the target vehicle), the cloud platform may first consider a vehicle type priority, and then consider escape time of the vehicle. The cloud platform sorts vehicles in descending order of priorities and in ascending order of time, and selects a vehicle that helps improve overall escape efficiency of a deadlock vehicle group as the target vehicle.

According to a second aspect, this application provides a vehicle deadlock processing method, where the method is applied to a first vehicle, and the method includes:
determining vehicle deadlock information of the first vehicle; and
sending the vehicle deadlock information of the first vehicle, where the vehicle deadlock information of the first vehicle includes identification information of the first vehicle, and further includes location information of the first vehicle and/or information about a first conflict object corresponding to the first vehicle.

In a possible implementation, the method further includes:
receiving an escape suggestion for the first vehicle, where the escape suggestion corresponds to the vehicle deadlock information of the first vehicle.

In a possible implementation, before the sending the vehicle deadlock information of the first vehicle, the method further includes:
determining that a period after which the first vehicle is to be deadlocked is greater than or equal to a third threshold.

In this implementation, when a vehicle is to be deadlocked, the vehicle may first determine, through single-vehicle game decision-making, whether there is an avoidable route. If there is an avoidable route, the vehicle first attempts to resolve the incoming deadlock through a route calculated by the vehicle. If there is no avoidable route, the vehicle needs to stop and yield. In this case, deadlock timing determining is performed. When a period after which the vehicle is to be deadlocked exceeds (that is, is greater than or equal to) preset waiting threshold time (namely, the third threshold), vehicle deadlock information is notified and reported to a cloud platform through a standardized interface, to request assistance in releasing the deadlock. This can prevent the cloud platform from frequently receiving a deadlock resolving request.

In a possible implementation, the escape suggestion for the first vehicle includes a stop and yield suggestion, or a yield route suggestion, or an escape route recommended for the first vehicle.

In a possible implementation, when the vehicle deadlock information of the first vehicle is not associated with vehicle deadlock information of any second vehicle, the escape suggestion for the first vehicle includes the escape route recommended for the first vehicle.

In a possible implementation, when the vehicle deadlock information of the first vehicle is associated with vehicle deadlock information of at least one second vehicle, the escape suggestion for the first vehicle includes the stop and yield suggestion, or the yield route suggestion, or the escape route recommended for the first vehicle.

In a possible implementation, the escape suggestion for the first vehicle includes the stop and yield suggestion or the yield route suggestion, and the method further includes:
sending a first response message, where the first response message includes yield acknowledgement information or yield rejection information.

In a possible implementation, the escape suggestion for the first vehicle includes the escape route recommended for the first vehicle, and the method further includes:
sending an escape result, where the escape result includes an escape failure or an escape success.

According to a third aspect, this application provides a vehicle deadlock processing apparatus, where the apparatus includes:
a transceiver unit, configured to receive vehicle deadlock information from a first vehicle, where the vehicle deadlock information of the first vehicle includes identification information of the first vehicle, and further includes location information of the first vehicle and/or information about a first conflict object corresponding to the first vehicle; and
a processing unit, configured to send an escape suggestion for the first vehicle to the first vehicle and/or send an escape suggestion for at least one second vehicle to the at least one second vehicle based on the vehicle deadlock information of the first vehicle, where the at least one second vehicle is a vehicle associated with the vehicle deadlock information of the first vehicle.

In a possible implementation, when sending the escape suggestion for the first vehicle to the first vehicle and/or sending the escape suggestion for at least one second vehicle to the at least one second vehicle based on the vehicle deadlock information of the first vehicle, the processing unit is configured to:
when the vehicle deadlock information of the first vehicle is not associated with vehicle deadlock information of another vehicle, send an escape route for the first vehicle to the first vehicle through the transceiver unit.

In a possible implementation, when sending the escape suggestion for the first vehicle to the first vehicle and/or sending the escape suggestion for the at least one second vehicle to the at least one second vehicle based on the vehicle deadlock information of the first vehicle, the processing unit is configured to:
when the vehicle deadlock information of the first vehicle is associated with vehicle deadlock information of another vehicle, send the escape suggestion for the first vehicle to the first vehicle and send the escape suggestion for the at least one second vehicle to the at least one second vehicle through the transceiver unit, where the at least one second vehicle is the another vehicle.

In a possible implementation, when sending the escape suggestion for the first vehicle to the first vehicle and sending the escape suggestion for the at least one second vehicle to the at least one second vehicle, the transceiver unit is configured to:
send a first escape suggestion for a target vehicle to the target vehicle, where the first escape suggestion includes a first escape route recommended for the target vehicle; and
send a second escape suggestion to a third vehicle, where the second escape suggestion is a stop and yield suggestion or a yield route suggestion.

The target vehicle is a vehicle in the first vehicle and the at least one second vehicle, and the third vehicle is a vehicle other than the target vehicle in the first vehicle and the at least one second vehicle.

In a possible implementation, the transceiver unit is further configured to:
receive from the third vehicle a first response message in response to the second escape suggestion, where the first response message includes yield acknowledgement information or yield rejection information.

When sending the first escape suggestion for the target vehicle to the target vehicle, the transceiver unit is configured to:
when a quantity of received yield acknowledgement information is greater than a first threshold, send the first escape suggestion for the target vehicle to the target vehicle.

In a possible implementation,
the transceiver unit is further configured to receive an escape result from the target vehicle; and
the processing unit is configured to: if the escape result is an escape success, redetermine a target vehicle from a vehicle that has not escaped in the first vehicle and the at least one second vehicle until all of the first vehicle and the at least one second vehicle successfully escape; or
the processing unit is configured to: if the escape result is an escape failure, send a third escape suggestion for the target vehicle to the target vehicle through the transceiver unit, where the third escape suggestion includes a second escape route recommended for the target vehicle.

In a possible implementation, the processing unit is further configured to:
re-determine a target vehicle when a quantity of escape failures fed back by the target vehicle is greater than or equal to a second threshold.

In a possible implementation, the target vehicle is a vehicle that makes total escape time shortest for the first vehicle and the at least one second vehicle, and the total escape time is associated with escape time of the first vehicle and escape time of each of the at least one second vehicle. Optionally, the target vehicle may alternatively be a vehicle that makes total escape time meet a preset time threshold for the first vehicle and the at least one second vehicle. This is not limited herein.

In a possible implementation, escape time of any vehicle is determined based on first information.

The first information includes one or more of location information of the any vehicle, location information of a conflict object corresponding to the any vehicle, heading information of the any vehicle, location information of another vehicle that is included in vehicle deadlock information of the another vehicle associated with the any vehicle, location information of a conflict object corresponding to the another vehicle, and heading information of the conflict object corresponding to the another vehicle.

In a possible implementation, the first information further includes one or more of the following information:
a dynamic parameter of the any vehicle, path planning information of the any vehicle, and surrounding information.

In a possible implementation, the target vehicle is a vehicle with a highest vehicle type priority in the first vehicle and the at least one second vehicle. Optionally, the target vehicle is a vehicle that makes a priority meet a preset vehicle type priority for the first vehicle and the at least one second vehicle.

According to a fourth aspect, this application provides a vehicle deadlock processing apparatus, where the apparatus is used in a first vehicle, and the apparatus includes:
a processing unit, configured to determine vehicle deadlock information of the first vehicle; and
a transceiver unit, configured to send the vehicle deadlock information of the first vehicle, where the vehicle deadlock information of the first vehicle includes identification information of the first vehicle, and further includes location information of the first vehicle and/or information about a first conflict object corresponding to the first vehicle.

In a possible implementation, the transceiver unit is further configured to receive an escape suggestion for the first vehicle, where the escape suggestion corresponds to the vehicle deadlock information of the first vehicle.

In a possible implementation, the processing unit is further configured to:
determine whether a period after which the first vehicle is to be deadlocked is greater than or equal to a third threshold; and
when it is determined that the period after which the first vehicle is to be deadlocked is greater than or equal to the third threshold, send the vehicle deadlock information of the first vehicle through the transceiver unit.

In a possible implementation, the escape suggestion for the first vehicle includes a stop and yield suggestion, or a yield route suggestion, or an escape route recommended for the first vehicle.

In a possible implementation, when the vehicle deadlock information of the first vehicle is not associated with vehicle deadlock information of any second vehicle, the escape suggestion for the first vehicle includes the escape route recommended for the first vehicle.

In a possible implementation, when the vehicle deadlock information of the first vehicle is associated with vehicle deadlock information of at least one second vehicle, the escape suggestion for the first vehicle includes the stop and yield suggestion, or the yield route suggestion, or the escape route recommended for the first vehicle.

In a possible implementation, the escape suggestion for the first vehicle includes the stop and yield suggestion or the yield route suggestion, and the transceiver unit is further configured to:
send a first response message, where the first response message includes yield acknowledgement information or yield rejection information.

In a possible implementation, the escape suggestion for the first vehicle includes the escape route recommended for the first vehicle, and the transceiver unit is further configured to:
send an escape result, where the escape result includes an escape failure or an escape success.

According to a fifth aspect, this application provides a vehicle deadlock processing apparatus. The apparatus may be a server (for example, the server may be a cloud platform), or may be an apparatus in a server, or may be an apparatus that can be matched with a server for use. The vehicle deadlock processing apparatus may alternatively be a chip system. The vehicle deadlock processing apparatus may perform the method according to the first aspect. A function of the vehicle deadlock processing apparatus may be implemented by hardware, or may be implemented by executing corresponding software by hardware. The hardware or the software includes one or more units or modules corresponding to the foregoing functions. The unit or module may be software and/or hardware. For an operation performed by the vehicle deadlock processing apparatus and beneficial effects, refer to the method and beneficial effects in the first aspect. Details are not described again.

According to a sixth aspect, this application provides a vehicle deadlock processing apparatus. The apparatus may be a vehicle, or may be an apparatus in a vehicle, or may be an apparatus that can be matched with a vehicle for use. The vehicle deadlock processing apparatus may alternatively be a chip system. The vehicle deadlock processing apparatus may perform the method according to the second aspect. A function of the vehicle deadlock processing apparatus may be implemented by hardware, or may be implemented by executing corresponding software by hardware. The hardware or the software includes one or more units or modules corresponding to the foregoing functions. The unit or module may be software and/or hardware. For an operation performed by the vehicle deadlock processing apparatus and beneficial effects, refer to the method and beneficial effects in the first aspect. Details are not described again.

According to a seventh aspect, this application provides a vehicle deadlock processing apparatus, where the apparatus may be a server, the vehicle deadlock processing apparatus includes a processor and a transceiver, and the processor and the transceiver are configured to execute a computer program or instructions stored in at least one memory, for the apparatus to implement the method according to any implementation of the first aspect.

According to an eighth aspect, this application provides a vehicle deadlock processing apparatus, where the apparatus may be a server, and the vehicle deadlock processing apparatus includes a processor, a transceiver, and a memory. The processor, the transceiver, and the memory are coupled. The processor and the transceiver are configured to implement the method according to the first aspect and/or any implementation of the second aspect. Optionally, the memory and the processor may be integrated together.

According to a ninth aspect, this application provides a vehicle deadlock processing apparatus, where the apparatus may be a vehicle, the vehicle deadlock processing apparatus includes a processor and a transceiver, and the processor and the transceiver are configured to execute a computer program or instructions stored in at least one memory, for the apparatus to implement the method according to any implementation of the second aspect.

According to a tenth aspect, this application provides a vehicle deadlock processing apparatus, where the apparatus may be a vehicle, and the vehicle deadlock processing apparatus includes a processor, a transceiver, and a memory. The processor, the transceiver, and the memory are coupled. The processor and the transceiver are configured to implement the method according to the second aspect and/or any implementation of the second aspect. Optionally, the memory and the processor may be integrated together.

According to an eleventh aspect, this application provides a computer-readable storage medium. The storage medium stores a computer program or instructions, and when the computer program or the instructions are executed by a computer, the method according to the first aspect or any implementation of the second aspect is implemented.

According to a twelfth aspect, this application provides a computer program product including instructions. The computer program product includes computer program code, and when the computer program code is run on a computer, the method according to the first aspect or any implementation of the second aspect is implemented.

According to a thirteenth aspect, a vehicle deadlock processing system is provided, where the vehicle deadlock processing system includes the server according to the third aspect, the fifth aspect, the seventh aspect, or the eighth aspect, and the vehicle according to the fourth aspect, the sixth aspect, the ninth aspect, or the tenth aspect.

### BRIEF DESCRIPTION OF DRAWINGS

FIG. 1 is a diagram of a multi-vehicle deadlock scenario;
FIG. 2A and FIG. 2B are a diagram of an architecture of a vehicle conflict and deadlock resolving system according to an embodiment of this application;
FIG. 3 is a schematic flowchart of a vehicle deadlock processing method according to an embodiment of this application;
FIG. 4 is a diagram of a scenario in which a plurality of vehicle paths conflict with each other according to an embodiment of this application;
FIG. 5 is a diagram of a possible structure of a vehicle deadlock processing apparatus according to an embodiment of this application; and
FIG. 6 is a diagram of another possible structure of a vehicle deadlock processing apparatus according to an embodiment of this application.

### DESCRIPTION OF EMBODIMENTS

The following describes embodiments of this application with reference to the accompanying drawings in embodiments of this application.

Terms "first", "second", "third", "fourth", and the like in the specification, claims, and accompanying drawings in this application are used to differentiate different objects, and are not used to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification indicate computer-related entities, hardware, firmware, a combination of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

Some terms in this application are first described, to help a person skilled in the art have a better understanding.

### (1) Vehicle deadlock (deadlock)

As a quantity of autonomous vehicles gradually increases, a driving route interaction scenario becomes increasingly complex. When a plurality of autonomous vehicles are traveling toward each other and recognize each other as obstacles, the vehicles simultaneously adopt a strategy of yielding to each other, that is, "You yield to me, I yield to you", and consequently, the vehicles block each other's bypass routes, to cause a vehicle deadlock.

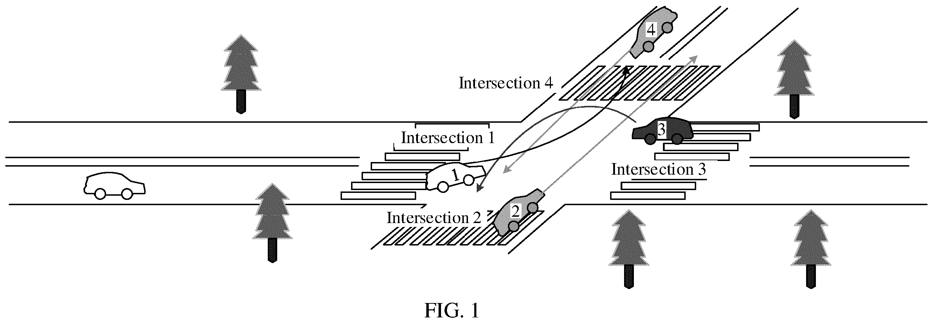

For example, refer to FIG. 1. FIG. 1 is a diagram of a multi-vehicle deadlock scenario. As shown in FIG. 1, four autonomous vehicles are passing through an intersection. Traveling routes of a vehicle 1 at an intersection 1 and a vehicle 3 at an intersection 3 are both left-turn traveling routes, and traveling routes of a vehicle 2 at an intersection 2 and a vehicle 4 at an intersection 4 are both straight traveling routes. Because the traveling routes of the four vehicles conflict, when the four vehicles recognize each other as obstacles, the vehicles simultaneously adopt a strategy of yielding to each other, that is, "You yield to me, I yield to you", and consequently, the plurality of vehicles block each other's traveling routes, to cause a deadlock. It may be understood that, in embodiments of this application, for example, for an autonomous vehicle, if a moving/static obstacle exists around the autonomous vehicle, when the autonomous vehicle is in a long-time stop state as a route on which the autonomous vehicle expects to travel and the autonomous vehicle can safely avoid an obstacle cannot be calculated, the long-time stop state may be understood as a deadlock.

(2) Information exchange between a vehicle and the outside means vehicle to everything, namely, vehicle to X (V2X), is a key technology of an intelligent transport system, and enables communication between vehicle to vehicle (vehicle to vehicle V2V), vehicle to infrastructure (vehicle to infrastructure, V2I), a vehicle and a road side unit, vehicle to network (vehicle to network, V2N), vehicle to pedestrian (vehicle to pedestrian, V2P), and the like. Therefore, a series of traffic information such as a real-time road condition, road information, and pedestrian information are obtained. With a V2X system, an autonomous driving system can obtain more real-time data, which may be used for real-time traffic information analysis, optimal route selection, and the like.

(3) A road side unit (road side unit, RSU) is an apparatus that is installed on a roadside and communicates with an on board unit (on board unit, OBU) by using a short-range communication technology (for example, a Cellular-V2X technology).

### (4) Single-vehicle game

When an ego vehicle senses, by using a sensing system like a lidar or a visual sensing system, that there is one or more other conflict vehicles (namely, another vehicle) that may conflict with the ego vehicle in a current traveling direction of the ego vehicle and that are around the ego vehicle, a decision module (or referred to as an autonomous driving module) of the ego vehicle determines whether the ego vehicle uses different strategies such as bypassing, stopping and yielding, or overtaking to avoid the conflict vehicles, to continue traveling. This process involves a game process: The decision module of the ego vehicle continuously predicts and analyzes a behavior of another vehicle, and predicts a next action of the another vehicle through a game. For example, the ego vehicle travels forward a little to see whether the another vehicle yields to the ego vehicle. If the another vehicle yields to the ego vehicle, the ego vehicle may cut in and accelerate to pass through the another vehicle. In this case, the ego vehicle may continue to accelerate to pass through another vehicle. If the another vehicle does not yield to the ego vehicle, the ego vehicle may stop and try to wait until the another vehicle passes through the ego vehicle. This decision that the ego vehicle continuously predicts a behavior of another vehicle to adjust a planning control behavior of the ego vehicle through a game is the single-vehicle game.

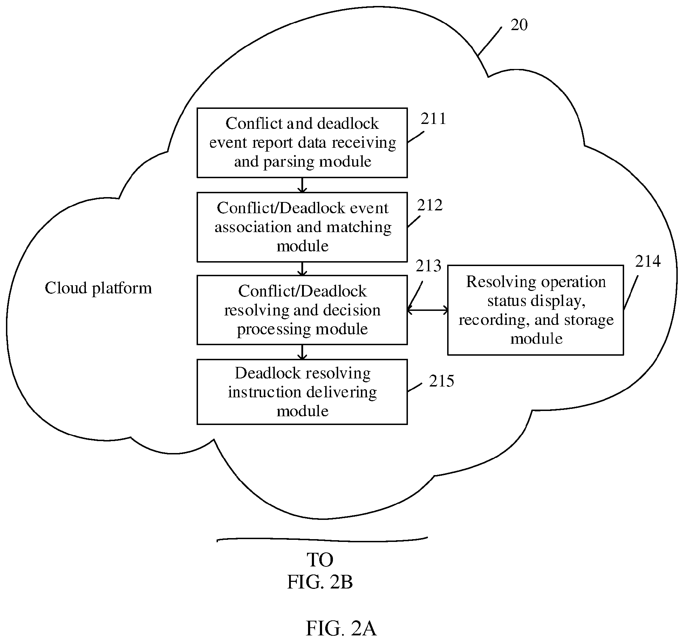

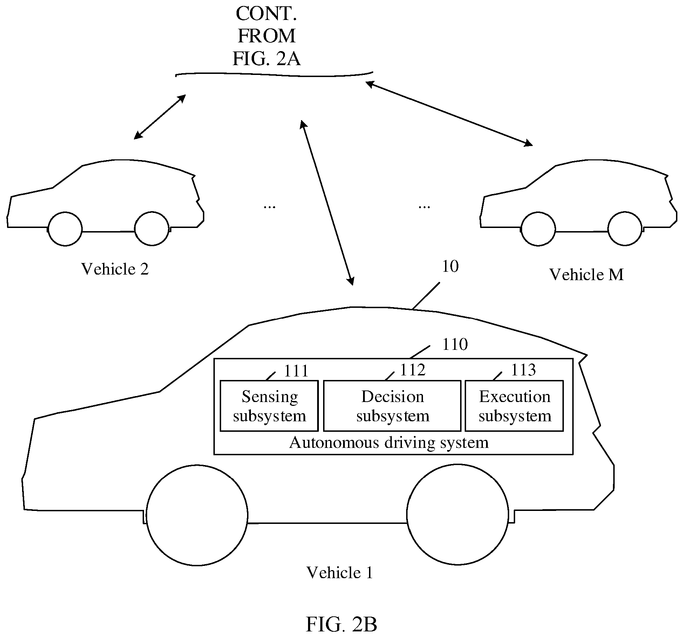

FIG. 2A and FIG. 2B are a diagram of an architecture of a vehicle conflict and deadlock resolving system according to an embodiment of this application. As shown in FIG. 2A and FIG. 2B, a conflict and deadlock resolving system of an autonomous vehicle may mainly include two parts: an autonomous driving system of a vehicle 10 (namely, a vehicle 1), a vehicle 2, a vehicle M (M is an integer greater than 0, and a quantity of vehicles shown in the figure is an example description, and a cloud platform generally establishes communication with a plurality of vehicles) and a cloud platform 20 (for example, a cloud device). The cloud platform herein may also be understood as a central control platform or the like. This is not limited herein.

An autonomous driving system 110 may include the following three subsystems: a sensing subsystem 111, a decision subsystem 112, and an execution subsystem 113.

The sensing subsystem 111 may include at least a sensor. For example, the sensor may include an internal sensor and an external sensor. The internal sensor is configured to monitor a status of the vehicle, and may include at least one of a vehicle speed sensor, an acceleration sensor, an angular velocity sensor, and the like. The external sensor is mainly configured to monitor an external environment around the vehicle, and for example, may include a video sensor and a radar sensor. The video sensor is configured to: obtain and monitor image data of the environment around the vehicle. The radar sensor is configured to: obtain and monitor electromagnetic wave data of the environment around the vehicle, and mainly detect data such as a distance between a surrounding object and the vehicle and a shape of the surrounding object by transmitting an electromagnetic wave and then receiving an electromagnetic wave reflected by the surrounding object.

For example, a plurality of radar sensors are distributed throughout the exterior of the vehicle 10. A subset of the plurality of radar sensors is coupled to the front of the vehicle 10, to position an object in front of the vehicle 10. One or more other radar sensors may be located at the rear of the vehicle 10, to position an object behind the vehicle 10 when the vehicle 10 moves backward. Other radar sensors may be located on the side of the vehicle 10, to position an object like another vehicle 10 approaching the vehicle 10 from the side. For example, a light detection and ranging (light detection and ranging, LIDAR) sensor may be mounted on the vehicle 10. For example, the LIDAR sensor is mounted in a rotating structure on the top of the vehicle 10. The LIDAR sensor is then rotated to transmit light signals around the vehicle 10 in a 360° mode, to continuously map all objects around the vehicle 10 as the vehicle 10 moves.

For example, an imaging sensor like a camera, a video camera, or other similar image capture sensors may be mounted on the vehicle 10 to capture images as the vehicle 10 moves. A plurality of imaging sensors may be mounted on all sides of the vehicle 10 to capture images around the vehicle 10 in a 360° mode. The imaging sensor captures not only visible spectrum images, but also infrared spectrum images.

For example, a global positioning system (global positioning system, GPS) sensor may be located on the vehicle 10 to provide a controller with geographical coordinates and coordinate generation time that are related to a location of the vehicle 10. The GPS includes both an antenna for receiving GPS satellite signals and a GPS receiver coupled to the antenna. For example, when an object is observed in an image or by another sensor, the GPS may provide the geographical coordinates and time of the discovery.

The decision subsystem 112 may include at least an electronic control unit (electronic control unit, ECU), a map database, and an object database. Optionally, the decision subsystem 112 may further include a communication unit. The ECU is a computing device configured to control the autonomous driving system. An autonomous driving ECU performs a decision control function of the autonomous driving system. For example, the autonomous driving ECU is connected to a bus, and communicates with another device through the bus. For example, the ECU may obtain information transferred by the internal and external sensors, the map database, and an HMI, and output corresponding information to the HMI and an actuator. For example, the ECU loads a program stored in a ROM to a RAM, and a CPU runs the program in the RAM to implement an autonomous driving function. The autonomous driving ECU may include a plurality of ECUs. The ECU may recognize a static and/or dynamic target around the vehicle, for example, may obtain a target monitoring result based on the external sensor. The ECU may monitor attributes such as a speed and a direction of a surrounding target. The ECU may obtain status information of the vehicle and output information based on the internal sensor. Based on the information, the ECU plans a driving path and outputs a corresponding control signal to the actuator, and the actuator executes corresponding lateral and longitudinal motion.

The execution subsystem 113 may include at least an actuator, configured to control lateral and/or longitudinal vehicle motion. For example, a brake actuator controls a braking system and braking force based on a control signal received from the autonomous driving ECU. A steering actuator controls a steering system based on a control signal from the autonomous driving ECU. Optionally, the steering system may be an electronic steering system or a mechanical steering system.

It should be noted that, when an ego vehicle (for example, the vehicle 10) plans a traveling route, because another vehicle that conflicts with the ego vehicle is also moving, when the ego vehicle senses the surroundings, two aspects are included: (1) a real-time location of the another vehicle; and (2) prediction of a next action of the another vehicle and a route for the another vehicle. Therefore, with reference to a sensing result, when the ego vehicle plans a route, two aspects of the conflict need to be correspondingly avoided: (1) A planned route for the ego vehicle cannot conflict with a current location of the another vehicle; and (2) The planned route for the ego vehicle cannot conflict with a predicted next action/route for the another vehicle.

It may be understood that, when the ego vehicle recognizes a location and a traveling state of the another vehicle around through the sensing subsystem 111 (including but not limited to a lidar, a radar, a camera, an infrared, and the like), if the decision subsystem 112 determines that a traveling path of the ego vehicle may conflict with that of the another vehicle, and an avoidable route cannot be calculated through decision-making and planning, the ego vehicle needs to stop and yield. After the ego vehicle stops, the ego vehicle periodically senses and recognizes a surrounding vehicle and an action. If an avoidable route can never be calculated, and when total stopping and waiting time exceeds preset waiting threshold time, vehicle deadlock information is generated and reported to a cloud platform, to request the cloud platform to help resolve a deadlock. Herein, to protect user privacy, the reported vehicle deadlock information needs to be anonymized. To be specific, when the ego vehicle senses that one or more other vehicles conflict with the ego vehicle, the ego vehicle may first determine, through single-vehicle game decision-making, whether there is an avoidable route. If there is no avoidable route, the ego vehicle needs to stop and yield. In this case, deadlock timing determining is performed. When the stopping and waiting time exceeds the preset waiting threshold time, anonymized vehicle deadlock information is generated and reported, to request the cloud platform to help resolve the deadlock.

The cloud platform 20 may resolve a multi-vehicle deadlock based on the vehicle deadlock information reported by the vehicle in a collaborative manner. Specifically, the cloud platform 20 may include the following five modules: a conflict and deadlock event report data receiving and parsing module 211, a conflict/deadlock event association and matching module 212, a conflict/deadlock resolving and decision processing module 213, a resolving operation status display, recording, and storage module 214, and a deadlock resolving instruction delivering module 215. Optionally, the foregoing modules may be different functional modules, or the foregoing modules may be integrated into one functional module, or some modules of the foregoing modules are integrated into one functional module. This is not limited herein. For ease of description, different functional modules are used as examples for illustration herein.

The conflict and deadlock event report data receiving and parsing module 211 is responsible for receiving and parsing the anonymized vehicle deadlock information that is reported. Herein, the vehicle deadlock information may also be referred to as a vehicle deadlock event, a deadlock event, deadlock event information, a conflict event, or the like. This is not limited herein. The vehicle deadlock information includes but is not limited to: a vehicle pseudo ID, vehicle location information, location information of a sensed conflict object, a location/heading of a vehicle in a deadlock, a vehicle kinematics model (optional), and vehicle path planning information (optional).

The conflict/deadlock event association and matching module 212 is configured to: perform map matching based on location information of vehicles included in a deadlock event reported by the plurality of vehicles, calculate whether the plurality of vehicles affect each other, and construct a deadlock area of a conflict vehicle cluster. An event management and matching module is configured to analyze whether the vehicle deadlock event forms a multi-vehicle deadlock scenario. Based on locations reported by the plurality of vehicles, the following processing scenarios may be included.

The reported deadlock event is that a single vehicle is deadlocked with an obstacle, and there is no multi-vehicle association. The cloud platform processes only a single-vehicle deadlock.

The reported deadlock event is associated with another reported deadlock event or a plurality of reported deadlock events, and a plurality of vehicles are deadlocked with each other. The cloud platform processes a multi-vehicle deadlock.

The reported deadlock event is associated with an associated multi-vehicle deadlock, and a deadlocked vehicle is a new object of a previous multi-vehicle deadlock vehicle group. The cloud platform processes a multi-vehicle deadlock after the new vehicle is added. That is, each time the cloud platform receives a new deadlock notification event, the cloud platform first recognizes, through map matching, an area in which the new deadlock event occurs. After a location area in which a deadlock event occurs is obtained through calculation, it is queried whether one or more deadlock events reported by another vehicle are not disabled in the location area. If the one or more deadlock events reported by the another vehicle are not disabled in the location area, it indicates that the newly reported vehicle deadlock event and the deadlock event of the another vehicle are in a same location area, and are associated with each other.

The conflict/deadlock resolving and decision processing module 213 is configured to: restore and match a traffic scenario in a deadlock area to a same coordinate system based on a location of a deadlocked vehicle, a sensed conflict object (for example, a vehicle or an obstacle), and with reference to data (if any) sensed by a road side unit or an uncrewed aerial vehicle. Based on a traffic condition in a multi-vehicle deadlock area, the conflict/deadlock resolving and decision processing module 213 selects an optimal to-be-escaped vehicle, collaborates with another vehicle for yielding, then notifies the optimal to-be-escaped vehicle to escape, and provides guidance.

The system restores a vehicle location and a traffic scenario in the multi-vehicle deadlock area based on a vehicle location and conflict object location information that are reported by each vehicle in the multi-vehicle deadlock area and with reference to data (if any) from other sensed data resources such as a road side unit or an uncrewed aerial vehicle, analyzes a possible escape route for each vehicle in the multi-vehicle deadlock area, and selects an optimal to-be-escaped vehicle (the vehicle preferably escapes to optimize efficiency for the entire system to resolve a conflict and deadlock).

The resolving operation status display, recording, and storage module 214 is configured to: record data of a reported vehicle deadlock event location and a decision instruction for resolving a deadlock, and display a deadlocked vehicle location, a recommended escape strategy, and a recommended escape route with reference to processing of a front-end event.

The deadlock resolving instruction delivering module 215 is configured to: deliver a collaborative yield request to vehicles that yield to the preferred to be-escaped vehicle, and send a deadlock resolving instruction and an escape suggestion to the preferred to be-escaped vehicle, to resolve deadlocked vehicles one by one. Based on suggestion and instruction execution results, a deadlock resolving state may include the following.

If the preferred to-be-escaped vehicle successfully escapes, the cloud platform selects a next preferred to-be-escaped vehicle to escape until all vehicles escape to resolve the deadlock.

If the preferred to-be-escaped vehicle fails in escaping, the cloud platform re-plans a route. After N failed attempts, the cloud platform selects another vehicle to preferably escape, where N is an integer greater than 0.

If all vehicles fail in automatically escaping, the system fails in processing a deadlock and generates an alarm to notify the vehicles of another intervention takeover manner for resolving the deadlock. For example, a manual takeover manner is used to resolve the deadlock.

The cloud platform associates a plurality of vehicles in a deadlock from a global perspective, preferably selects a preferred to-be-escaped vehicle based on a real-time traffic condition for deadlock resolving, and adopts a collaboration mechanism of a third-party cloud platform to help the plurality of vehicles quickly negotiate to obtain an optimal escape strategy, so as to implement quick and automatic resolving of a multi-vehicle conflict and deadlock in autonomous driving.

It should be noted that elements of the systems in FIG. 2A and FIG. 2B are for illustrative purposes only, and other systems including more or fewer components may be configured to perform any method disclosed in this application.

It should be noted that, in the conventional technology, it is proposed that after the conflict and deadlock occurs to the autonomous vehicles, remote control is manually operated on the vehicles through a remote control session (including a remote video takeover), to help the vehicles resolve the conflict and deadlock. However, helping the vehicles resolve the conflict and deadlock manually is low in efficiency.

In view of this, this application provides a vehicle deadlock processing method, to improve efficiency of processing a vehicle conflict and deadlock, and achieve high applicability.

It should be noted that a vehicle described in this application may be understood as an autonomous vehicle.

It should be noted that, that a distance between two vehicles is short in embodiments of this application may be understood as that a distance between locations of the two vehicles is less than or equal to a preset distance threshold.

It should be noted that this application may be applied to exception processing after a conflict and deadlock occurs in the autonomous vehicle, for example, may be applied to an autonomous driving project of a commercial vehicle in a port or a mine, or may be applied to an autonomous driving cloud control platform of a passenger vehicle, to help the passenger vehicle process a deadlock exception. For example, this application may be applied to a scenario in which vehicle routes in areas such as a non-signal-controlled intersection, upper and lower ramps, and a roundabout are interleaved and complex, and there is no signal light for unified command of a traffic rule in an urban road and a highway.

It should be noted that, a conflict object corresponding to a vehicle described in embodiments of this application may be understood as an object that is sensed by the vehicle and that blocks traveling of the vehicle. For example, a conflict object of a vehicle may be another vehicle, or may be an obstacle on a road. This is not limited herein. Optionally, the object that blocks traveling of the vehicle may be understood as a vehicle or an obstacle traveling in a preset path.

The following describes a vehicle deadlock processing method and a related apparatus that are provided in embodiments of this application.

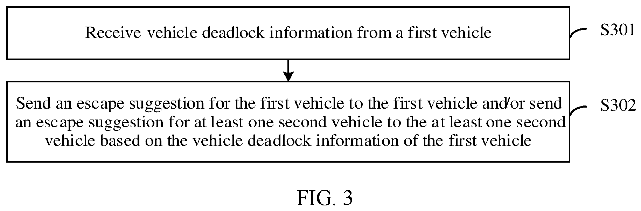

FIG. 3 is a schematic flowchart of a vehicle deadlock processing method according to an embodiment of this application. The method is executed by a controller or a server. The controller or the server herein may be a cloud platform, a cloud server, or the like. This is not limited herein. For ease of description, for example, the controller or the server is the cloud platform as an execution body in the following description. The method may include the following step S301 and step S302.

S301: Receive vehicle deadlock information from a first vehicle.

In some feasible implementations, when the first vehicle senses that one or more other vehicles conflict with the first vehicle, the first vehicle may first determine, through single-vehicle game decision-making, whether there is an avoidable route. If there is no avoidable route, the first vehicle needs to stop and yield. In this case, deadlock timing determining is performed. When a period after which the first vehicle is to be deadlocked exceeds (that is, is greater than or equal to) preset waiting threshold time, vehicle deadlock information is generated, and the generated vehicle deadlock information is sent to the cloud platform, to request the cloud platform to help resolve the deadlock. Correspondingly, the cloud platform receives the vehicle deadlock information from the first vehicle. The vehicle deadlock information of the first vehicle may include identification information of the first vehicle, location information of the first vehicle, information about a first conflict object corresponding to the first vehicle, and the like. This is not limited herein.

It may be understood that, to protect user privacy, the reported vehicle deadlock information needs to be anonymized. For example, the identification information of the first vehicle herein may be a pseudo id of the first vehicle, and one pseudo id may be used to uniquely recognize one vehicle. The reported information about the first conflict object may be location information of the first conflict object, attribute information of the first conflict object, or the like. This is not limited herein. Alternatively, the location information of the first conflict object may not be directly reported by the first vehicle, but is obtained by the cloud platform through deduction based on the reported attribute information of the first conflict object. For example, when the first conflict object is a vehicle, the attribute information of the first conflict object may be information that can help recognize a conflict vehicle, such as a vehicle model of the vehicle, appearance information of the vehicle, or image information of the vehicle. This is not limited herein. For another example, when the first conflict object is an obstacle, the attribute information of the first conflict object may be a shape of the obstacle, image information of the obstacle, or the like. This is not limited herein. When the cloud platform obtains the location information of the first conflict object through deduction based on the reported attribute information of the first conflict object, the cloud platform may predict the location information of the first conflict object based on the location information of the first vehicle and with reference to the image information of the first conflict object. For ease of understanding, an example in which both the location information of the first vehicle and the location information of the first conflict object corresponding to the first vehicle are directly reported by the first vehicle is mainly used for description subsequently.

Optionally, the vehicle deadlock information of the first vehicle may further include one or more of a vehicle type of the first vehicle, heading information of the first vehicle, path planning information of the first vehicle, a vehicle model of the first vehicle, a dynamic parameter of the first vehicle, and the like. This is not limited herein. The vehicle type may include an ambulance, a fire engine, a police vehicle, an engineering rescue vehicle, an ordinary vehicle, and the like. This is not limited herein. Optionally, the vehicle type may further include a commercial vehicle, a passenger vehicle, and the like. Optionally, the vehicle type may further include a small vehicle, a large vehicle, and the like. Generally, in consideration of an actual requirement, a special vehicle (a vehicle for performing a special operation, for example, an ambulance or a fire engine) preferably escapes. For another example, a commercial vehicle first escapes, and then a passenger vehicle escapes. For another example, a small vehicle first escapes, and then a large vehicle escapes. The heading information of the vehicle indicates a direction of a vehicle head, and the path planning information of the vehicle indicates an intended traveling path of the vehicle. It may be understood that the location information of the vehicle and the heading information of the vehicle may be collectively referred to as pose information of the vehicle. The vehicle model may include a small vehicle, a medium vehicle, a large vehicle, or the like. The reported vehicle model herein may be mainly used as an input parameter of a general kinematics model, to obtain a dynamic parameter of the vehicle. The dynamic parameter of the vehicle may include a minimum turning radius, a maximum rotation angle, a distance between a front axle and a rear axle of the vehicle, and the like. This is not limited herein. It should be noted that a dynamic parameter of a vehicle may be actively reported by the vehicle to the cloud platform, or a dynamic parameter of a vehicle may be deduced by the cloud platform based on information such as a vehicle model reported by the vehicle. For example, the vehicle model is used as an input parameter of the general kinematics model, to obtain a dynamic parameter that is of the vehicle and that is output by the general kinematics model, or the dynamic parameter of the vehicle may be a dynamic parameter pre-stored in the cloud platform.

Optionally, the vehicle deadlock information of the first vehicle may further include a vehicle deadlock information identifier. As vehicle deadlock information sent by a same vehicle at different moments is different, the vehicle deadlock information identifier may be used to recognize vehicle deadlock information corresponding to a current deadlock of a vehicle.

It should be noted that each vehicle may report vehicle deadlock information corresponding to the vehicle through a standardized universal interface. Cross-platform (multi-vehicle manufacturer sharing) and privacy anonymization functions can be implemented through a universal interface. It may be understood that each vehicle may alternatively report vehicle deadlock information corresponding to the vehicle in another manner. This is not specifically limited in embodiments of this application.

Optionally, when any second vehicle senses that one or more other vehicles conflict with the second vehicle, similar to the first vehicle, the second vehicle may also send vehicle deadlock information of the second vehicle to the cloud platform when an autonomous driving module of the second vehicle fails in gaming. Correspondingly, the cloud platform receives the vehicle deadlock information from the second vehicle. Optionally, the cloud platform may determine, based on the vehicle deadlock information reported by the first vehicle and the vehicle deadlock information reported by the second vehicle, whether the first vehicle is associated with the second vehicle. It may be understood that, if the second vehicle in this application is associated with the first vehicle, or if it is described as that the vehicle deadlock information of the second vehicle is associated with the vehicle deadlock information of the first vehicle, it may be understood that the first vehicle and the second vehicle are vehicles in a same deadlock area, that is, the first vehicle and the second vehicle jointly form a deadlock vehicle group/vehicle escape set, or it is described as that the first vehicle and the second vehicle form a deadlock.

S302: The cloud platform sends an escape suggestion for the first vehicle to the first vehicle and/or sends an escape suggestion for at least one second vehicle to the at least one second vehicle based on the vehicle deadlock information of the first vehicle.

In some feasible implementations, that the cloud platform sends an escape suggestion for the first vehicle to the first vehicle and/or sends an escape suggestion for at least one second vehicle to the at least one second vehicle based on the vehicle deadlock information of the first vehicle may be understood as follows:
(1) When the vehicle deadlock information of the first vehicle is not associated with vehicle deadlock information of another vehicle, the cloud platform sends an escape route for the first vehicle to the first vehicle. For example, when only the first vehicle reports the vehicle deadlock information, or when the cloud platform determines that the first vehicle and the another vehicle do not belong to a same deadlock area even though both the first vehicle and the another vehicle report the vehicle deadlock information, or when the first conflict object corresponding to the first vehicle is a static obstacle, it is considered that the vehicle deadlock information of the first vehicle is not associated with the vehicle deadlock information of the another vehicle.
(2) When the vehicle deadlock information of the first vehicle is associated with vehicle deadlock information of another vehicle, the cloud platform sends the escape suggestion for the first vehicle to the first vehicle, and sends the escape suggestion for the at least one second vehicle to the at least one second vehicle, where the at least one second vehicle is the another vehicle. For example, that the vehicle deadlock information of the first vehicle is associated with vehicle deadlock information of the another vehicle may be understood as that the first vehicle and the another vehicle belong to a same deadlock vehicle group or are located in a same deadlock area. For ease of description, an example in which the another vehicle associated with the vehicle deadlock information of the first vehicle is the at least one second vehicle is mainly used for description subsequently.

In other words, after the cloud platform receives the vehicle deadlock information reported by the first vehicle, the cloud platform needs to determine whether vehicle deadlock information of at least one second vehicle is associated with the vehicle deadlock information of the first vehicle. If there is no at least one second vehicle whose vehicle deadlock information is associated with the vehicle deadlock information of the first vehicle, an escape suggestion for the first vehicle is sent to the first vehicle, where the escape suggestion for the first vehicle is an escape route for the first vehicle. If there is at least one second vehicle whose vehicle deadlock information is associated with the vehicle deadlock information of the first vehicle, an escape suggestion is sent to the first vehicle and the at least one second vehicle. In other words, when the vehicle deadlock information of the first vehicle is not associated with vehicle deadlock information of any second vehicle, the cloud platform sends an escape suggestion for the first vehicle to the first vehicle, where the escape suggestion for the first vehicle is an escape route for the first vehicle. When the vehicle deadlock information of the first vehicle is associated with the vehicle deadlock information of the at least one second vehicle, the cloud platform sends an escape suggestion to the first vehicle and the at least one second vehicle.

Optionally, that the cloud platform sends an escape suggestion for the first vehicle to the first vehicle and/or sends an escape suggestion for at least one second vehicle to the at least one second vehicle based on the vehicle deadlock information of the first vehicle may be alternatively understood as that: When the vehicle deadlock information of the first vehicle is associated with vehicle deadlock information of another vehicle, the escape suggestion for the at least one second vehicle is sent to the at least one second vehicle, where the at least one second vehicle is the another vehicle. In other words, when a deadlock occurs in the first vehicle and the at least one second vehicle, the cloud platform may alternatively send an escape suggestion to only the at least one second vehicle, and the autonomous driving module of the first vehicle may determine whether the first vehicle escapes.

According to embodiments of this application, for example, that the vehicle deadlock information of the first vehicle is associated with the vehicle deadlock information of the second vehicle may be understood as follows: (1) The location information that is of the first vehicle and that is reported by the first vehicle and location information that is of the second vehicle and that is reported by the second vehicle belong to a same deadlock area. For example, when a distance between a location of the first vehicle and a location of the second vehicle is less than a preset distance threshold, it is considered that the first vehicle and the second vehicle are close to each other or belong to a same deadlock area. (2) The location information that is of the first vehicle and that is reported by the first vehicle and location information that is of a second conflict object corresponding to the second vehicle and that is reported by the second vehicle belong to a same deadlock area. For example, when a distance between a location of the first vehicle and a location that is of the second conflict object corresponding to the second vehicle and that is reported by the second vehicle is less than a preset distance threshold, it is considered that the first vehicle and the second vehicle are close to each other or belong to a same deadlock area. In other words, the first vehicle is the second conflict object sensed by the second vehicle. Alternatively, location information that is of a first conflict object corresponding to the first vehicle and that is reported by the first vehicle and location information that is of the second vehicle and that is reported by the second vehicle belong to a same deadlock area. For example, when a distance between a location that is of the first conflict object corresponding to the first vehicle and that is reported by the first vehicle and a location that is of the second vehicle and that is reported by the second vehicle is less than a preset distance threshold, it is considered that the first vehicle and the second vehicle are close to each other or belong to a same deadlock area. In other words, the second vehicle is the first conflict object sensed by the first vehicle. (3) The location information that is of the first conflict object corresponding to the first vehicle and that is reported by the first vehicle is the same as or similar to the location information that is of the second conflict object corresponding to the second vehicle and that is reported by the second vehicle. In other words, a conflict object sensed by the first vehicle and a conflict object sensed by the second vehicle are a same conflict object. For example, when the conflict object is located between the first vehicle and the second vehicle, and blocks the first vehicle and the second vehicle, although the first vehicle and the second vehicle cannot sense each other, the first vehicle and the second vehicle belong to a same deadlock area. Optionally, that the vehicle deadlock information of the first vehicle is associated with the vehicle deadlock information of the second vehicle may be further understood as follows: The cloud platform performs trajectory conflict detection on the first vehicle and the second vehicle based on the vehicle deadlock information reported by the first vehicle and the vehicle deadlock information of the second vehicle. If it is determined that a trajectory of the first vehicle conflicts with a trajectory of the second vehicle, it indicates that the first vehicle is associated with the second vehicle. If it is determined that a trajectory of the first vehicle does not conflict with a trajectory of the second vehicle, it indicates that the first vehicle is not associated with the second vehicle.

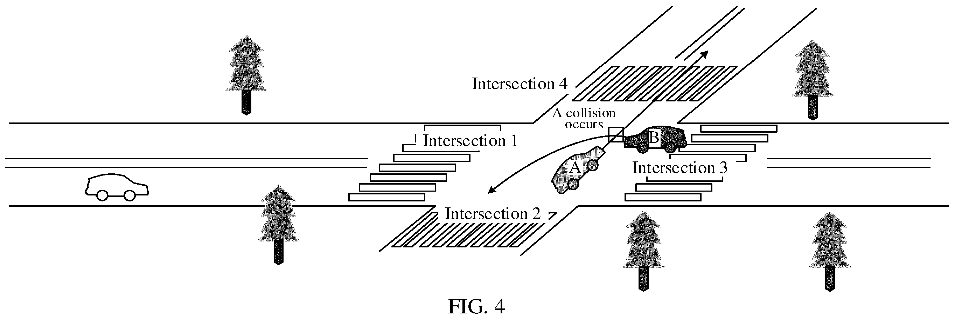

For example, the cloud platform may mainly detect whether paths of a plurality of vehicles conflict with each other based on two types of data in the vehicle deadlock information: (1) a location of each deadlocked vehicle in a vehicle cluster of a deadlock area, and path planning information (namely, a trajectory route that is intended to travel or navigation); and (2) location information of a conflict object (for example, another vehicle/obstacle) sensed by each vehicle in the vehicle cluster of the deadlock area. The location information is matched to a map, so that location information of all obstacles and vehicles in the deadlock area can be obtained. When it is detected whether the paths of the plurality of vehicles conflict with each other, for example, when it is determined whether a path of a vehicle A conflicts with a path of a vehicle B, trajectory routes that are intended to travel and that are included in vehicle deadlock information reported by the vehicle A and vehicle deadlock information reported by the vehicle B are read. If the trajectory route of the vehicle A intersects with the trajectory route of the vehicle B (for example, as shown in FIG. 4), it indicates that a collision (namely, a conflict) occurs in an intersection area. On the contrary, if the trajectory routes of the vehicle A and the vehicle B do not intersect, it indicates that no conflict occurs in paths of the vehicle A and the vehicle B.

It may be understood that the vehicle deadlock information of the first vehicle is not associated with the vehicle deadlock information of the second vehicle may be understood as follows: When the second vehicle is the first conflict object sensed by the first vehicle, although the first vehicle reports information about the first conflict object to the cloud platform, the cloud platform determines, based on other obtained information (for example, vehicle deadlock information reported by each vehicle, and/or surrounding information reported by a road side unit, an uncrewed aerial vehicle, and the like), that the first conflict object actually does not block driving of the first vehicle. Therefore, the cloud platform may determine that the vehicle deadlock information of the first vehicle is not associated with the vehicle deadlock information of the second device, that is, the first vehicle and the second vehicle do not belong to a same deadlock area. For example, it is assumed that a preceding vehicle (for example, the vehicle B) that is on a same lane as the first vehicle (for example, the vehicle A) stops due to a conflict or an exception, and becomes the first conflict object of the vehicle A. After the vehicle A recognizes that the preceding vehicle (namely, the vehicle B) stops, because the vehicle A cannot obtain surrounding information such as a stop reason of the vehicle B and presence or absence of another vehicle in front of the vehicle B, the vehicle A cannot determine whether to bypass the first conflict object (namely, the vehicle B) that stops in front of the vehicle A by overtaking. Therefore, a stopping and waiting strategy is adopted. If the first conflict object is always in a stopped state, the vehicle A enters a deadlock state after the waiting time threshold is exceeded. In this case, the cloud platform may determine, based on obtained global information, whether there is another conflict object in front of the first conflict object, and recognize whether the vehicle A can bypass the first conflict object by overtaking to resolve a deadlock. When the cloud platform obtains the global information to determine that the vehicle A can overtake to avoid the first conflict object, the first conflict object actually does not block traveling of the vehicle A, and the vehicle A is not associated with the deadlock of the first conflict object.

It should be noted that if the vehicle deadlock information of any second vehicle is not associated with the vehicle deadlock information of the first vehicle, it indicates that a deadlock type of the first vehicle is a single-vehicle deadlock. Therefore, the cloud platform may directly send, to the first vehicle, an escape route recommended for the first vehicle. Correspondingly, the first vehicle receives the escape route recommended for the first vehicle from the cloud platform. Therefore, the first vehicle may start, and escapes by using the escape route sent by the cloud platform.

Optionally, if the vehicle deadlock information of the at least one second vehicle is associated with the vehicle deadlock information of the first vehicle, it indicates that the deadlock type of the first vehicle is a multi-vehicle deadlock. Therefore, that the cloud platform sends an escape suggestion for the first vehicle to the first vehicle and sends an escape suggestion for at least one second vehicle to the at least one second vehicle may be understood as follows: The cloud platform sends a first escape suggestion for a target vehicle to the target vehicle, and sends a second escape suggestion to a third vehicle. The first escape suggestion includes a first escape route recommended for the target vehicle, and the second escape suggestion is a stop and yield suggestion or a yield route suggestion. The target vehicle is a vehicle in the first vehicle and the at least one second vehicle, and the third vehicle is a vehicle other than the target vehicle in the first vehicle and the at least one second vehicle. In other words, when a plurality of vehicles are deadlocked, the cloud platform may select the target vehicle from the first vehicle and the at least one second vehicle, send the second escape suggestion to another vehicle (namely, the third vehicle) other than the target vehicle in the first vehicle and the at least one second vehicle, and send the first escape suggestion for the target vehicle to the target vehicle. The second escape suggestion is a stop and yield suggestion, or the second escape suggestion is a yield route suggestion.

Optionally, after receiving the second escape suggestion, the third vehicle may feed back a first response message to the cloud platform. Correspondingly, the cloud platform receives from the third vehicle the first response message in response to the second escape suggestion, where the first response message includes yield acknowledgement information or yield rejection information. Optionally, for the cloud platform, only when a quantity of yield acknowledgement information received by the cloud platform is greater than a first threshold, the cloud platform sends the first escape suggestion for the target vehicle to the target vehicle. In other words, before the cloud platform sends the first escape suggestion for the target vehicle to the target vehicle, the cloud platform may further receive, from a vehicle other than the target vehicle in the first vehicle and the at least one second vehicle, the first response message for the second escape suggestion, where the first response message includes the yield acknowledgement information or the yield rejection information. For example, when a quantity of yield acknowledgement information received by the cloud platform is greater than the first threshold, the cloud platform sends the first escape suggestion for the target vehicle to the target vehicle. In other words, the cloud platform may select, based on a traffic condition of a multi-vehicle deadlock area, an optimal to-be-escaped vehicle or a vehicle that meets a specific condition as a vehicle that first escapes. Therefore, the cloud platform may first coordinate another vehicle that is not selected as the vehicle that first escapes to yield. Herein, the yielding manner may be stopping a non-target vehicle to yield or starting a vehicle to avoid by using a yield route. When all other vehicles agree to yield or more than a specific quantity (namely, the first threshold) of vehicles agree to yield, the optimal to-be-escaped vehicle is notified to escape, and a recommended escape route is provided. It may be understood that after receiving the first escape suggestion from the cloud platform, the target vehicle may start based on the first escape suggestion, and escapes by using an escape route for the target vehicle.

It should be noted that the first escape suggestion is the first escape route recommended for the target vehicle. In an implementation, after receiving the first escape suggestion, the target vehicle may directly execute the first escape suggestion, that is, the target vehicle may start to travel by using the first escape route. Optionally, in another implementation, after receiving the first escape suggestion, the target vehicle may alternatively refuse to execute the first escape suggestion. Therefore, the cloud platform may subsequently redetermine a target vehicle.

It should be noted that, when the second escape suggestion is a stop and yield suggestion, in an implementation, when receiving the second escape suggestion, the third vehicle may directly execute the second escape suggestion, that is, the third vehicle does not move or does not start, and feeds back yield acknowledge information. Optionally, the third vehicle may alternatively refuse to execute the second escape suggestion, and therefore directly feeds back yield rejection information. Optionally, the third vehicle may further determine a route based on a decision of an autonomous driving module of the third vehicle, to start the third vehicle for running. When the second escape suggestion is a yield route suggestion, the yield route suggestion may be understood as a yield route recommended by the cloud platform for the third vehicle. Therefore, after receiving the second escape suggestion, the third vehicle may directly execute the second escape suggestion, that is, the third vehicle starts to travel by using the yield route, to avoid the target vehicle and feed back yield acknowledge information. Optionally, after receiving the second escape suggestion, the third vehicle may refuse to execute the second escape suggestion, and therefore directly feeds back yield rejection information.

Optionally, the target vehicle may further send an escape result to the cloud platform. If the escape result is an escape success, a target vehicle is redetermined from a vehicle that has not escaped in the first vehicle and the at least one second vehicle until all of the first vehicle and the at least one second vehicle successfully escape or more than a specific quantity of vehicles in the first vehicle and the at least one second vehicle successfully escape. If the escape result is an escape failure, the cloud platform sends a third escape suggestion for the target vehicle to the target vehicle, where the third escape suggestion includes a second escape route recommended for the target vehicle, and the second escape route herein is another escape route different from the first escape route. It should be noted that, when a quantity of escape failures fed back by the target vehicle is greater than or equal to a second threshold, the cloud platform needs to re-determine a target vehicle. In other words, if the target vehicle successfully escapes, the cloud platform selects a next target vehicle for escaping until all or most of the vehicles escape, to resolve a deadlock. If the target vehicle fails in escaping, the cloud platform retries to plan a route, and after N attempts fail, the cloud platform selects another vehicle to preferably escape. Herein, N is the second threshold, and N is an integer greater than 0. Optionally, if all vehicles fail in automatically escaping, the cloud platform fails in processing a deadlock, generates an alarm, and notifies the vehicles of another intervention takeover manner to resolve the deadlock. For example, a manual takeover manner is used to resolve the deadlock.

Optionally, the target vehicle selected from the first vehicle and the at least one second vehicle in an embodiment of this application may alternatively be a vehicle with a highest vehicle type priority or a vehicle that meets a preset vehicle type priority in the first vehicle and the at least one second vehicle. In other words, the selecting the target vehicle from the first vehicle and the at least one second vehicle may be understood as follows: selecting the target vehicle from the first vehicle and the at least one second vehicle based on a priority of a vehicle type, a vehicle type of the first vehicle, and a vehicle type of the at least one second vehicle. The target vehicle is a vehicle with a highest vehicle type priority in the first vehicle and the at least one second vehicle, or the target vehicle is a vehicle that meets a preset vehicle type priority in the first vehicle and the at least one second vehicle. For ease of understanding, an example in which the target vehicle is a vehicle with a highest vehicle type priority in the first vehicle and the at least one second vehicle is mainly used for description subsequently.

Optionally, the target vehicle selected from the first vehicle and the at least one second vehicle in this embodiment of this application may alternatively be a vehicle that makes total escape time shortest for the first vehicle and the at least one second vehicle. Herein, the total escape time is associated with escape time of the first vehicle and escape time of each of the at least one second vehicle. Optionally, the target vehicle may alternatively be a vehicle that makes total escape time meet a preset time threshold for the first vehicle and the at least one second vehicle. This is not limited herein.

Optionally, in a manner of selecting the target vehicle, a combination of a vehicle type priority and vehicle escape time may be further considered. For example, a vehicle with a highest vehicle type priority or a vehicle that meets a preset vehicle type priority may be first selected from the first vehicle and the at least one second vehicle based on the vehicle type priority. It should be noted that, if there are a plurality of vehicles with a highest vehicle type priority or a plurality of vehicles that meet a preset vehicle type priority in the first vehicle and the at least one second vehicle, the target vehicle is a vehicle that is in the plurality of vehicles with a highest vehicle type priority and that has the shortest total escape time, or the target vehicle is a vehicle that is in the plurality of vehicles with a highest vehicle type priority and that has total escape time meeting a preset time threshold. For ease of understanding, an example in which the target vehicle is a vehicle that is in the plurality of vehicles with a highest vehicle type priority and that has the shortest total escape time is mainly used for description subsequently.

Herein, the shortest total escape time may be understood as shortest escape time to be consumed by all vehicles that have not escaped in the first vehicle and the at least one second vehicle. In other words, the cloud platform restores a vehicle location and a traffic scenario in a multi-vehicle deadlock area based on vehicle location and conflict object location information that are reported by each vehicle in the multi-vehicle deadlock area and with reference to data (if any) from other sensed data sources such as a road side unit or an uncrewed aerial vehicle, analyzes a possible escape route for each vehicle in the multi-vehicle deadlock area, and selects a target vehicle, where the target vehicle preferably escapes to optimize efficiency for the entire system to resolve a conflict and deadlock. In other words, the target vehicle is a vehicle that has a high priority and that helps improve escape efficiency of another vehicle in the deadlock area after the target vehicle escapes.

It may be understood that each time a target vehicle that preferably escapes is determined, and after the target vehicle successfully escapes, a traffic scenario changes. Therefore, priority sorting needs to be re-performed on remaining vehicles that have not escaped, and a next target vehicle that preferably escapes is calculated until the deadlock is resolved. For a manner of re-performing priority sorting on the remaining vehicles that have not escaped, and calculating a target vehicle that preferably escapes, refer to an implementation of selecting the target vehicle from the first vehicle and the at least one second vehicle. Details are not described herein again.

For any one of the first vehicle and the at least one second vehicle, the any vehicle herein may be described as a fourth vehicle, and escape time of the fourth vehicle may be determined based on first information. The first information includes location information of the fourth vehicle, location information of a conflict object corresponding to the fourth vehicle, heading information of the fourth vehicle, location information of another vehicle included in vehicle deadlock information of the another vehicle associated with the fourth vehicle, and location information of a conflict object corresponding to the another vehicle. Optionally, the first information further includes one or more of the following information: a dynamic parameter of the fourth vehicle, path planning information of the fourth vehicle, and surrounding information. Herein, the surrounding information may be data that is sampled by another data source such as a road side unit or an uncrewed aerial vehicle and that is used to restore a traffic scenario in a deadlock area. In other words, the cloud platform may determine an escape route for the fourth vehicle based on the first information, and determine escape time based on a distance of the escape route and an escape speed of the fourth to-be-escaped vehicle.

Optionally, in some feasible implementations, for an escape result fed back by any vehicle, the cloud platform may further record an escape success log or an escape failure log, and store the log.

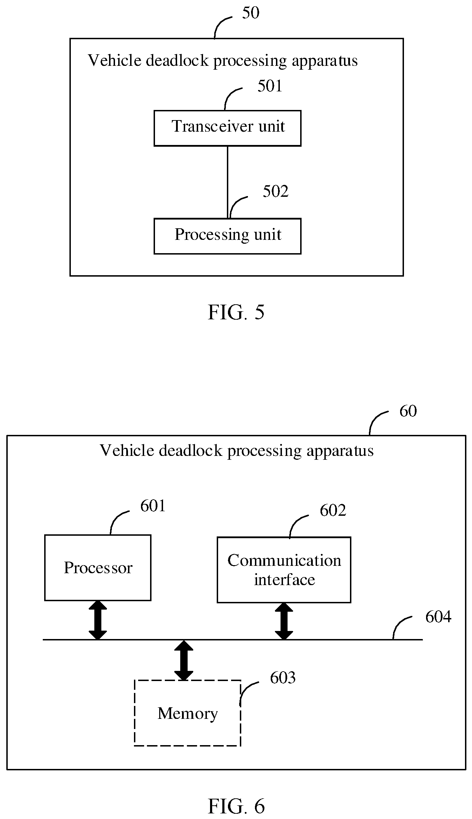

The following describes in detail a vehicle deadlock processing apparatus provided in this application with reference to FIG. 5 and FIG. 6.

FIG. 5 is a diagram of a possible structure of a vehicle deadlock processing apparatus according to an embodiment of this application.

The vehicle deadlock processing apparatus 50 may be a cloud platform, for example, an independent device like a cloud or a server, or may be a component included in an independent device, for example, a chip, a software module, or an integrated circuit. The vehicle deadlock processing apparatus 50 is configured to implement the foregoing vehicle deadlock processing method, for example, the vehicle deadlock processing method in the embodiment shown in FIG. 3.

Optionally, the vehicle deadlock processing apparatus 50 may be a mobile terminal, for example, an independent device like a vehicle, or may be a component included in an independent device, for example, a chip, a software module, or an integrated circuit. The vehicle deadlock processing apparatus 50 is configured to implement the foregoing vehicle deadlock processing method, for example, the vehicle deadlock processing method in the embodiment shown in FIG. 3.

In a possible implementation, the vehicle deadlock processing apparatus 500 may include a transceiver unit 501 and a processing unit 502. The processing unit 502 may be configured to implement a computing function or a processing function of the foregoing vehicle deadlock processing method, for example, S302, and/or configured to support another process of the technology described in the foregoing method. The transceiver unit 501 may be configured to perform a data obtaining operation in the foregoing vehicle deadlock processing method, for example, S301, and/or configured to support another process of the technology described in this specification, for example, a process of obtaining path decision information and/or surrounding information. In some possible implementation scenarios, the transceiver unit 501 may be alternatively replaced with a communication interface module and/or a transceiver module, and the interface module and/or the transceiver module may be configured to support another process of the technology described in the foregoing method.

In a possible design, the vehicle deadlock processing apparatus 50 is configured to implement the vehicle deadlock processing method in the embodiment shown in FIG. 3.

The transceiver unit 501 is configured to receive vehicle deadlock information from a first vehicle, where the vehicle deadlock information of the first vehicle includes identification information of the first vehicle, and further includes location information of the first vehicle and/or information about a first conflict object corresponding to the first vehicle.

The processing unit 502 is configured to send an escape suggestion for the first vehicle to the first vehicle and/or send an escape suggestion for at least one second vehicle to the at least one second vehicle based on the vehicle deadlock information of the first vehicle, where the at least one second vehicle is a vehicle associated with the vehicle deadlock information of the first vehicle.

In a possible implementation, when sending the escape suggestion for the first vehicle to the first vehicle and/or sending the escape suggestion for at least one second vehicle to the at least one second vehicle based on the vehicle deadlock information of the first vehicle, the processing unit 502 is configured to:
when the vehicle deadlock information of the first vehicle is not associated with vehicle deadlock information of another vehicle, send an escape route for the first vehicle to the first vehicle through the transceiver unit 501.

In a possible implementation, when sending the escape suggestion for the first vehicle to the first vehicle and/or sending the escape suggestion for at least one second vehicle to the at least one second vehicle based on the vehicle deadlock information of the first vehicle, the processing unit 502 is configured to:
when the vehicle deadlock information of the first vehicle is associated with vehicle deadlock information of another vehicle, send the escape suggestion for the first vehicle to the first vehicle and send the escape suggestion for the at least one second vehicle to the at least one second vehicle through the transceiver unit 501, where the at least one second vehicle is the another vehicle.

In a possible implementation, when sending the escape suggestion for the first vehicle to the first vehicle and sending the escape suggestion for at least one second vehicle to the at least one second vehicle, the transceiver unit 501 is configured to:
send a first escape suggestion for a target vehicle to the target vehicle, where the first escape suggestion includes a first escape route recommended for the target vehicle; and
send a second escape suggestion to a third vehicle, where the second escape suggestion is a stop and yield suggestion or a yield route suggestion.

The target vehicle is a vehicle in the first vehicle and the at least one second vehicle, and the third vehicle is a vehicle other than the target vehicle in the first vehicle and the at least one second vehicle.

In a possible implementation, the transceiver unit 501 is further configured to:
receive from the third vehicle a first response message in response to the second escape suggestion, where the first response message includes yield acknowledgement information or yield rejection information.

When sending the first escape suggestion for the target vehicle to the target vehicle, the transceiver unit 501 is configured to:
when a quantity of received yield acknowledgement information is greater than a first threshold, send the first escape suggestion for the target vehicle to the target vehicle.

In a possible implementation,
the transceiver unit 501 is further configured to receive an escape result from the target vehicle;
the processing unit 502 is configured to: if the escape result is an escape success, redetermine a target vehicle from a vehicle that has not escaped in the first vehicle and the at least one second vehicle until all of the first vehicle and the at least one second vehicle successfully escape; or
the processing unit 502 is configured to: if the escape result is an escape failure, send a third escape suggestion for the target vehicle to the target vehicle through the transceiver unit 501, where the third escape suggestion includes a second escape route recommended for the target vehicle.

In a possible implementation, the processing unit 502 is further configured to:
re-determine a target vehicle when a quantity of escape failures fed back by the target vehicle is greater than or equal to a second threshold.

In a possible implementation, the target vehicle is a vehicle that makes global escape time shortest for the first vehicle and the at least one second vehicle, and the total escape time is associated with escape time of the first vehicle and escape time of each of the at least one second vehicle.

In a possible implementation, escape time of any vehicle is determined based on first information.

The first information includes one or more of location information of the any vehicle, location information of a conflict object corresponding to the any vehicle, heading information of the any vehicle, location information of another vehicle that is included in vehicle deadlock information of the another vehicle associated with the any vehicle, location information of a conflict object corresponding to the another vehicle, and heading information of the conflict object corresponding to the another vehicle.

In a possible implementation, the first information further includes one or more of the following information:
a dynamic parameter of the any vehicle, path planning information of the any vehicle, and surrounding information.

In a possible implementation, the target vehicle is a vehicle with a highest vehicle type priority in the first vehicle and the at least one second vehicle. Optionally, the target vehicle is a vehicle that makes priority meet a preset vehicle type priority for the first vehicle and the at least one second vehicle.

In another possible design, the vehicle deadlock processing apparatus 50 is configured to implement the vehicle deadlock processing method in the embodiment shown in FIG. 3.

The processing unit 502 is configured to determine vehicle deadlock information of the first vehicle.

The transceiver unit 501 is configured to send the vehicle deadlock information of the first vehicle, where the vehicle deadlock information of the first vehicle includes identification information of the first vehicle, and further includes location information of the first vehicle and/or information about a first conflict object corresponding to the first vehicle.

In a possible implementation, the transceiver unit 501 is further configured to receive an escape suggestion for the first vehicle, where the escape suggestion corresponds to the vehicle deadlock information of the first vehicle.

In a possible implementation, the processing unit 502 is further configured to:
determine whether a period after which the first vehicle is to be deadlocked is greater than or equal to a third threshold; and
when it is determined that the period after which the first vehicle is to be deadlocked is greater than or equal to the third threshold, send the vehicle deadlock information of the first vehicle through the transceiver unit 501.

In a possible implementation, the escape suggestion for the first vehicle includes the stop and yield suggestion, or the yield route suggestion, or the escape route recommended for the first vehicle.

In a possible implementation, when the vehicle deadlock information of the first vehicle is not associated with vehicle deadlock information of any second vehicle, the escape suggestion for the first vehicle includes the escape route recommended for the first vehicle.

In a possible implementation, when the vehicle deadlock information of the first vehicle is associated with vehicle deadlock information of at least one second vehicle, the escape suggestion for the first vehicle includes the stop and yield suggestion, or the yield route suggestion, or the escape route recommended for the first vehicle.

In a possible implementation, the escape suggestion for the first vehicle includes the stop and yield suggestion or the yield route suggestion, and the transceiver unit 501 is further configured to:
send a first response message, where the first response message includes yield acknowledgement information or yield rejection information.

In a possible implementation, the escape suggestion for the first vehicle includes the escape route recommended for the first vehicle, and the transceiver unit 501 is further configured to:
send an escape result, where the escape result includes an escape failure or an escape success.

For related descriptions, refer to the description in FIG. 3.

It should be understood that division of units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, so as to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In this embodiment of this application, the processor is a circuit that has a signal processing capability. In an implementation, the processor may be a circuit that has an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of the hardware circuit. The logical relationship of the hardware circuit is fixed or reconfigurable. For example, the processor is an application-specific integrated circuit (application-specific integrated circuit, ASIC) or a hardware circuit, for example, the FPGA, implemented by a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

For example, FIG. 6 is a diagram of another possible structure of a vehicle deadlock processing apparatus according to an embodiment of this application.

The vehicle deadlock processing apparatus 60 may be a cloud platform, for example, an independent device like a cloud or a server, or may be a component included in an independent device, for example, a chip, a software module, or an integrated circuit.

Optionally, the vehicle deadlock processing apparatus 60 may be a mobile terminal, for example, an independent device like a vehicle, or may be a component included in an independent device, for example, a chip, a software module, or an integrated circuit.

The vehicle deadlock processing apparatus 60 may include at least one processor 601 and a communication interface 602. Optionally, the vehicle deadlock processing apparatus may further include at least one memory 603. Further, optionally, the vehicle deadlock processing apparatus may further include a connecting circuit 604. The processor 601, the communication interface 602, and/or the memory 603 are connected through the connecting circuit 604, and communicate with each other through the connecting circuit 604, to transfer a control signal and/or a data signal.
(1) The processor 601 is a module for performing an arithmetic operation and/or a logical operation, and may specifically include one or more of the following apparatuses: a central processing unit (central processing unit, CPU), a microcontroller unit (microcontroller unit, MCU), an application processor (application processor, AP), a time-to-digital converter (time-to-digital converter, TDC), an electronic control unit (electronic control unit, ECU), a filter, a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor (assisting a central processing unit in completing corresponding processing and application), and/or a neural-network processor (neural-network processing unit, NPU), and the like.
(2) The communication interface 602 may be configured to provide information input or output for the at least one processor. In some possible scenarios, the communication interface 602 may include an interface circuit, and/or, the communication interface 602 may be configured to receive data sent from the outside and/or send data to the outside. For example, the communication interface 602 may be a wired link interface including an Ethernet cable and the like, or may be a wireless link (Wi-Fi, Bluetooth, universal wireless transmission, an onboard short-range communication technology, another short-range wireless communication technology, or the like) interface. Optionally, the communication interface 602 may further include a transmitter (for example, a radio frequency transmitter or an antenna), a receiver, or the like coupled to the interface.

Optionally, if the vehicle deadlock processing apparatus 60 is an independent device, the communication interface 602 may include a receiver and a transmitter. The receiver and the transmitter may be a same component or different components. When the receiver and the transmitter are a same component, the component may be referred to as a transceiver.

Optionally, if the vehicle deadlock processing apparatus 60 is a chip or a circuit, the communication interface 602 may include an input interface and an output interface. The input interface and the output interface may be a same interface, or may be different interfaces.

Optionally, a function of the communication interface 602 may be implemented through a transceiver circuit or a dedicated transceiver chip. The processor 601 may be implemented by using a dedicated processing chip, a processing circuit, a processor, or a general-purpose chip.

(3) The memory 603 is configured to provide storage space, and the storage space may store data such as an operating system and a computer program. The memory 603 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

The foregoing enumerated functions and actions of the modules or units in the vehicle deadlock processing apparatus 60 are merely examples for description.

Functional units in the vehicle deadlock processing apparatus 60 may be configured to implement the foregoing vehicle deadlock processing method, for example, the method described in the embodiment shown in FIG. 3. Herein, detailed descriptions are omitted to avoid repetition.

Optionally, the processor 601 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when a computing device includes the at least one memory 603, if the processor 601 invokes a computer program to implement the foregoing method, the computer program may be stored in the memory 603.

An embodiment of this application further provides a chip system. The chip system includes a processor and a communication interface. The communication interface is configured to receive and/or send data, and/or the communication interface is configured to provide input and/or output for the processor. The chip system is configured to implement the foregoing vehicle deadlock processing method, for example, the method described in FIG. 3.

An embodiment of this application further provides a computer-readable storage medium. The computer-readable storage medium stores instructions. When the instructions are run on a computing device, the computing device is enabled to implement the foregoing vehicle deadlock processing method, for example, the method in FIG. 3.

An embodiment of this application further provides a server. The server is configured to implement the foregoing vehicle deadlock processing method, for example, the method in FIG. 3. Optionally, the server may include a vehicle deadlock processing apparatus (for example, the vehicle deadlock processing apparatus 50 or the vehicle deadlock processing apparatus 60). Optionally, the server may be a cloud platform, a road side unit (road side unit, RSU), edge computing, or the like.

An embodiment of this application further provides a terminal. The terminal is configured to implement the foregoing vehicle deadlock processing method, for example, the method in FIG. 3. Optionally, the terminal may include a vehicle deadlock processing apparatus (for example, the vehicle deadlock processing apparatus 50 or the vehicle deadlock processing apparatus 60). Optionally, the terminal is a vehicle, an uncrewed aerial vehicle, or a robot. Alternatively, the terminal may be any possible smart home device, an intelligent wearable device, an intelligent manufacturing device, or the like. Optionally, the vehicle deadlock processing apparatus may be integrated into a mobile data center (mobile data center, MDC) of a vehicle.

An embodiment of this application further provides a computer program product. The computer program product includes computer instructions. When the computer instructions are executed by a computing device, the foregoing vehicle deadlock processing method is implemented.

This application further provides a vehicle deadlock processing system. The vehicle deadlock processing system includes a vehicle and a cloud platform.

In embodiments of this application, a term like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In the embodiments of this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are used to distinguish between a plurality of objects, but are not intended to limit an order, a time sequence, priorities, or importance of the plurality of obj ects. For example, a first device and a second device are merely for ease of description, and do not indicate a difference of the first device and the second device in terms of a structure and a degree of importance. In some embodiments, the first device and the second device may alternatively be a same device.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application. A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A vehicle deadlock processing method, comprising:
receiving vehicle deadlock information from a first vehicle, wherein the vehicle deadlock information of the first vehicle comprises identification information of the first vehicle, and further comprises location information of the first vehicle and/or information about a first conflict object corresponding to the first vehicle; and
sending an escape suggestion for the first vehicle to the first vehicle and/or sending an escape suggestion for at least one second vehicle to the at least one second vehicle based on the vehicle deadlock information of the first vehicle, wherein the at least one second vehicle is a vehicle associated with the vehicle deadlock information of the first vehicle.

2. The method according to claim 1, wherein the sending an escape suggestion for the first vehicle to the first vehicle and/or sending an escape suggestion for at least one second vehicle to the at least one second vehicle based on the vehicle deadlock information of the first vehicle comprises:
when the vehicle deadlock information of the first vehicle is not associated with vehicle deadlock information of another vehicle, sending an escape route for the first vehicle to the first vehicle.

3. The method according to claim 1, wherein the sending an escape suggestion for the first vehicle to the first vehicle and/or sending an escape suggestion for at least one second vehicle to the at least one second vehicle based on the vehicle deadlock information of the first vehicle comprises:
when the vehicle deadlock information of the first vehicle is associated with vehicle deadlock information of another vehicle, sending the escape suggestion for the first vehicle to the first vehicle and sending the escape suggestion for the at least one second vehicle to the at least one second vehicle, wherein the at least one second vehicle is the another vehicle.

4. The method according to claim 3, wherein the sending the escape suggestion for the first vehicle to the first vehicle and sending the escape suggestion for the at least one second vehicle to the at least one second vehicle comprise:
sending a first escape suggestion for a target vehicle to the target vehicle, wherein the first escape suggestion comprises a first escape route recommended for the target vehicle; and
sending a second escape suggestion to a third vehicle, wherein the second escape suggestion is a stop and yield suggestion or a yield route suggestion, wherein
the target vehicle is a vehicle in the first vehicle and the at least one second vehicle, and the third vehicle is a vehicle other than the target vehicle in the first vehicle and the at least one second vehicle.

5. The method according to claim 4, wherein the method further comprises:
receiving from the third vehicle a first response message in response to the second escape suggestion, wherein the first response message comprises yield acknowledgement information or yield rejection information; and
the sending a first escape suggestion for a target vehicle to the target vehicle comprises:
when a quantity of received yield acknowledgement information is greater than a first threshold, sending the first escape suggestion for the target vehicle to the target vehicle.

6. The method according to claim 4 or 5, wherein the method further comprises:
receiving an escape result from the target vehicle; and
if the escape result is an escape success, re-determining a target vehicle from a vehicle that has not escaped in the first vehicle and the at least one second vehicle until all of the first vehicle and the at least one second vehicle successfully escape; or
if the escape result is an escape failure, sending a third escape suggestion for the target vehicle to the target vehicle, wherein the third escape suggestion comprises a second escape route recommended for the target vehicle.

7. The method according to claim 6, wherein the method further comprises:
re-determining a target vehicle when a quantity of escape failures fed back by the target vehicle is greater than or equal to a second threshold.

8. The method according to any one of claims 4 to 7, wherein
the target vehicle is a vehicle that makes total escape time shortest for the first vehicle and the at least one second vehicle, and the total escape time is associated with escape time of the first vehicle and escape time of each of the at least one second vehicle.

9. The method according to claim 8, wherein
escape time of any vehicle is determined based on first information, wherein
the first information comprises one or more of location information of the any vehicle, location information of a conflict object corresponding to the any vehicle, heading information of the any vehicle, location information of another vehicle that is comprised in vehicle deadlock information of the another vehicle associated with the any vehicle, location information of a conflict object corresponding to the another vehicle, and heading information of the conflict object corresponding to the another vehicle.

10. The method according to claim 9, wherein the first information further comprises one or more of the following information:
a dynamic parameter of the any vehicle, path planning information of the any vehicle, and surrounding information.

11. The method according to any one of claims 4 to 10, wherein
the target vehicle is a vehicle with a highest vehicle type priority in the first vehicle and the at least one second vehicle.

12. A vehicle deadlock processing method, wherein the method is applied to a first vehicle, and comprises:
determining vehicle deadlock information of the first vehicle; and
sending the vehicle deadlock information of the first vehicle, wherein the vehicle deadlock information of the first vehicle comprises identification information of the first vehicle, and further comprises location information of the first vehicle and/or information about a first conflict object corresponding to the first vehicle.

13. The method according to claim 12, wherein the method further comprises:
receiving an escape suggestion for the first vehicle, wherein the escape suggestion corresponds to the vehicle deadlock information of the first vehicle.

14. The method according to claim 12, wherein before the sending the vehicle deadlock information of the first vehicle, the method further comprises:
determining that a period after which the first vehicle is to be deadlocked is greater than or equal to a third threshold.

15. The method according to any one of claims 12 to 14, wherein the escape suggestion for the first vehicle comprises a stop and yield suggestion, or a yield route suggestion, or an escape route recommended for the first vehicle.

16. The method according to claim 15, wherein when the vehicle deadlock information of the first vehicle is not associated with vehicle deadlock information of any second vehicle, the escape suggestion for the first vehicle comprises the escape route recommended for the first vehicle.

17. The method according to claim 15, wherein when the vehicle deadlock information of the first vehicle is associated with vehicle deadlock information of at least one second vehicle, the escape suggestion for the first vehicle comprises the stop and yield suggestion, or the yield route suggestion, or the escape route recommended for the first vehicle.

18. The method according to claim 17, wherein the escape suggestion for the first vehicle comprises the stop and yield suggestion or the yield route suggestion, and the method further comprises:
sending a first response message, wherein the first response message comprises yield acknowledgement information or yield rejection information.

19. The method according to claim 17, wherein the escape suggestion for the first vehicle comprises the escape route recommended for the first vehicle, and the method further comprises:
sending an escape result, wherein the escape result comprises an escape failure or an escape success.

20. A vehicle deadlock processing apparatus, comprising a unit or a module configured to perform the method according to any one of claims 1 to 11.

21. A vehicle deadlock processing apparatus, wherein the vehicle deadlock processing apparatus is used in a vehicle, and comprises a unit or a module configured to perform the method according to any one of claims 12 to 19.

22. A vehicle deadlock processing apparatus, comprising:
one or more processors, one or more transceivers, and one or more memories, wherein
the one or more memories are configured to store a computer program, and the one or more processors and the one or more transceivers are configured to execute the computer program stored in the one or more memories, for the vehicle deadlock processing apparatus to perform the method according to any one of claims 1 to 11.

23. A vehicle deadlock processing apparatus, wherein the vehicle deadlock processing apparatus is used in a vehicle, and comprises:
one or more processors, one or more transceivers, and one or more memories, wherein
the one or more memories are configured to store a computer program, and the one or more processors and the one or more transceivers are configured to execute the computer program stored in the one or more memories, for the vehicle deadlock processing apparatus to perform the method according to any one of claims 12 to 19.

24. A computer-readable storage medium, wherein the storage medium stores a computer program or instructions, and when the computer program or the instructions are executed by a computer, the method according to any one of claims 1 to 11 is implemented, or the method according to any one of claims 12 to 19 is implemented.

25. A computer program product, comprising computer program code, wherein when the computer program code is run on a computer, the method according to any one of claims 1 to 11 is implemented, or the method according to any one of claims 12 to 19 is implemented.
